# EUROPEAN PATENT APPLICATION

(11) **EP 4 727 039 A1**
(43) Date of publication of application: **15.04.2026**
(21) Application number: 25190963.6
(22) Date of filing: 22.07.2025
(51) Int. Cl.: H04J 14/02, H04Q 11/00

(54) **AMPLIFIER ENHANCED OPTICAL SIGNAL SPECTRUM FILTERING METHOD AND SYSTEM**

(30) Priority: 10.10.2024 US 202418911884
(71) Applicant: II-VI Delaware, Inc., Wilmington, DE 19890 (US)
(72) Inventor: Blown, Patrick Jeffrey, Wilmington, DE 19890 (US); Clarke, Ian Grainge, Wilmington, DE 19890 (US)
(74) Representative: Forresters IP LLP

(57) **Abstract**

In a method and system for filtering a broadband optical, the broadband optical signal is filtered a number of times, optically amplified one or more times during or after being filtered the number of times, and provided to an optical receiving device. The optical filtering may include using the same or different filtering functions. When the optical filtering includes different filtering functions, a first one of the different filtering functions may include phase and amplitude filtering and a second one of the different filtering functions may include amplitude only filtering.

## Description

### BACKGROUND

### 1) Field of Disclosure

The present disclosure relates to methods and systems for optically filtering broadband optical signal spectrums and, more particularly, for optically shaping or filtering broadband optical signal spectrums using amplifier enhancement.

### 2) Description of Related Art

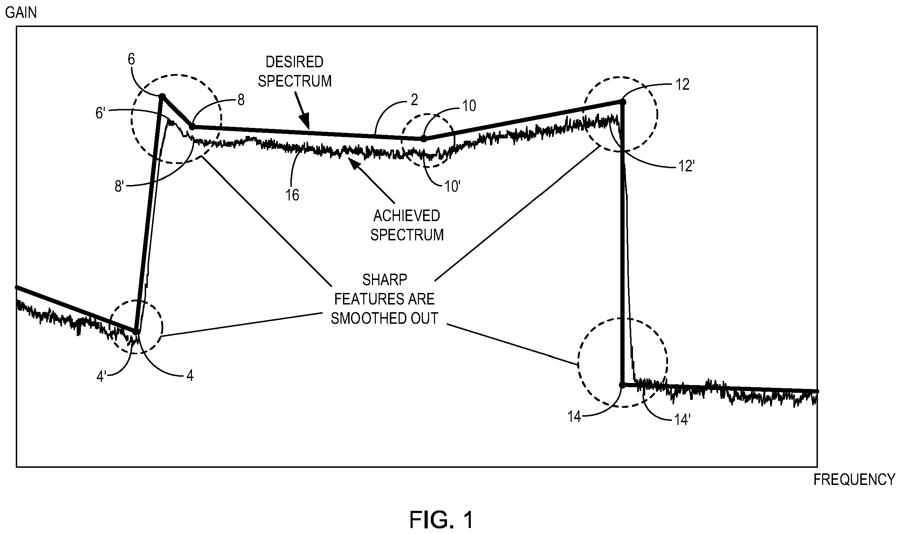

There is an ongoing desire to produce broadband optical signal spectrums, e.g., a spectrum having wavelengths between 1520 and 1610 nm (near infrared), with sharp features or transitions. For example, as illustrated in Fig. 1, a desired broadband optical signal spectrum 2 may include sharp features or transitions 4 - 14 where the slope of the desired broadband optical signal spectrum 2 changes rapidly or suddenly, e.g., from a positive slope to a negative slope or vice versa (e.g., at 4, 6, 10, and 12), or from a negative (or positive) slope having a first value to a negative (or positive) slope having a second value (e.g., at 8 and 14).

However, in practice with current state of the art broadband optical signal spectrum filtering methods and systems, these sharp features or transitions are smoothed out in an achieved broadband optical signal spectrum 16, as shown for example at 4' - 14'.

### SUMMARY

Disclosed is a method of filtering a broadband optical signal. The method may comprise (a) outputting a broadband optical signal; (b) filtering the broadband optical signal a plurality of times; (c) optically amplifying the broadband optical signal; and (d) providing the filtered and amplified broadband optical signal to an optical receiving device.

Also disclosed is a method of filtering a broadband optical signal comprising: (a) causing a broadband optical signal to pass multiple times through a first wavelength selective switch (WSS1); (b) between at least one pair of passes of the broadband optical signal through the WSS1 in step (a), amplifying the broadband optical signal; (c) following steps (a) and (b), causing a broadband optical signal to pass multiple times through a second wavelength selective switch (WSS2); and (d) between at least one pair of passes of the broadband optical signal through the WSS2 in step (c), amplifying the broadband optical signal.

Finally, also disclosed is a broadband optical signal filtering system comprising first and second optical amplifiers and first and second wavelength selective switches (WSS1 and WSS2) connected whereupon, a broadband optical signal passes through the broadband optical signal filtering system in the following order: (a) through the WSS1 at least one time; (b) through the first optical amplifier; (c) through the WSS1 at least once more; (d) through the WSS2 at least one time; (e) through the second optical amplifier; and (f) through the WSS2 at least once more.

### BRIEF DESCRIPTION OF THE DRAWINGS

Fig. 1 shows example schematic plots of frequency vs. gain of a desired broadband optical signal spectrum versus an achieved broadband optical signal spectrum;
Fig. 2A shows a schematic example of a broadband optical signal filtering system in accordance with the principles of the present disclosure;
Fig. 2B is a schematic flow diagram of the broadband optical signal filtering system of Fig. 2A showing more clearly the flow of the optical signal through the broadband optical signal filtering system of Fig. 2A;
Fig. 3A shows another schematic example broadband optical signal filtering system in accordance with the principles of the present disclosure;
Fig. 3B is a schematic flow diagram of the broadband optical signal filtering system of Fig. 3A showing more clearly the flow of the optical signal through the broadband optical signal filtering system of Fig. 3A;
Fig. 4A shows yet another schematic example broadband optical signal filtering system in accordance with the principles of the present disclosure;
Fig. 4B is a schematic flow diagram of the broadband optical signal filtering system of Fig. 4A showing more clearly the flow of the optical signal through the broadband optical signal filtering system of Fig. 4A;
Fig. 5A is shows schematic example plots of frequency vs. gain of broadband optical signal spectrums output by the example broadband optical signal filtering systems shown in Figs. 2A-4B; and
Fig. 5B is an isolated enlargement of the circled portion of schematic example plots of frequency vs. gain of the broadband optical signal spectrums in Fig. 5A.

### DETAILED DESCRIPTION

As used herein, spatial or directional terms, such as "left", "right", "inner", "outer", "above", "below", and the like, relate to the disclosure as it is shown in the drawing figures. However, it is to be understood that the disclosure can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure.

At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

As used herein, "coupled", "coupling", and similar terms refer to two or more elements that are joined, linked, fastened, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

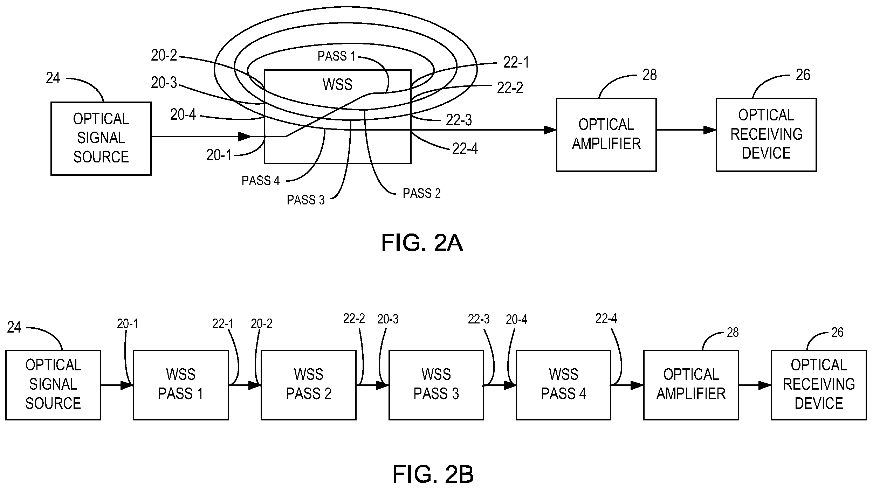

With reference to Figs. 2A-4B, in the present disclosure, one or more wavelength selective switches (WSS) are used in combination with one or more optical amplifiers (OA) to provide sharper filtering of an optical signal. WSS' are well known in the art as evidenced by U.S. Patent Nos. 10,461,878; 8,867,917; 7,397,980; and 7,092,599 each of which is incorporated herein in its entirety by reference. Accordingly, for the purpose of simplicity, details regarding the configuration and/or internal operation of each WSS disclosed herein will only be described as necessary for an understanding of the present disclosure.

As would be understood by one skilled in the art, each WSS disclosed in this disclosure may be programmed, operative, and/or configured to control an optical signal passing therethrough using the same filter pattern or filtering function for each pass of the optical signal passing therethrough. In an example, this filter pattern or filtering function may comprise controlling: (1) the amplitude only of the optical signal passing each time through the WSS; (2) the phase only of the optical signal passing each time through the WSS; or (3) both the amplitude and phase of the optical signal passing each time through the WSS.

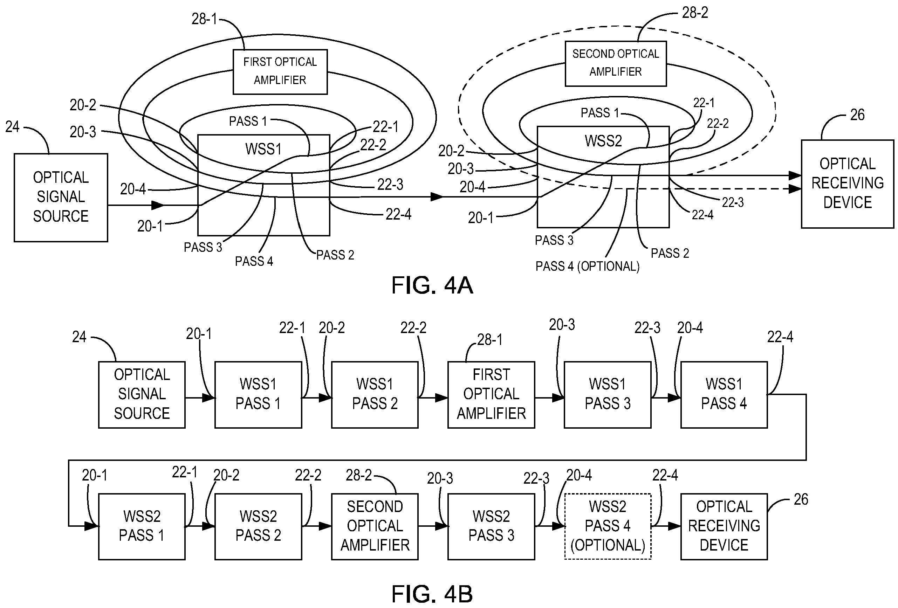

In the example shown in Figs. 4A-4B, a first WSS (WSS1) may, in an example, be programmed, operative, and/or configured to control both the phase and amplitude of an optical signal passing therethrough, which optical signal may be received from an optical signal source. The optical signal may be passed multiple times through the WSS1, wherein during each pass therethrough the WSS1 may, for example, control the phase and amplitude of the optical signal using the same filter pattern or filtering function. However, this is not to be construed in a limiting sense since it is envisioned that the WSS1 may be programmed, operative, and/or configured to control the phase only or the amplitude only of each pass of the optical signal through the WSS1 using the same filter pattern or filtering function. The multiple passes of the optical signal through the WSS1 may be combined with amplification, e.g., by an OA, between a pair of passes through the WSS1 to minimize the effect of crosstalk on the optical signal. After passing through the WSS 1 multiple times, the optical signal may be provided to a second WSS (WSS2) which may be programmed, operative, and/or configured to control the phase and/or amplitude of the optical signal. The optical signal may then be passed multiple times through the WSS2 to remove artifacts created by any phase control applied to the optical signal by passing the optical signal multiple times through the WSS 1. In a specific example, the WSS2 may be programmed, operative, and/or configured to control only the amplitude of the optical signal during each pass of the optical signal through the WSS2 using the same filter pattern or filtering function. The multiple passes of the optical signal through the WSS2 may be combined with amplification, e.g., by an OA, between a pair of passes through the WSS1 to minimize the effect of crosstalk on the optical signal. After multiple passes of the optical signal through the WSS2, the optical signal may be provided to a suitable and/or desirable optical receiving device for further processing and/or handling.

In an example, each WSS may be programmed, operative, and/or configured to produce from a broadband optical signal input into the WSS, an output optical signal having a programmable optical spectrum between, for example, without limitation, wavelengths of 1520 and 1610 nm (in the near infrared spectrum) with each wavelength having a programmable intensity ranging over multiple (e.g., approximately 4) orders of magnitude.

As is known in the art, a WSS may have a number of programmable inputs/outputs (I/Os), each comprising, for example, an optical fiber for propagation of an incoming or outgoing optical signal to or from the WSS. In an example, each I/O of a WSS may be independently programmed, operative, and/or configured as an input for receiving an incoming optical signal for subsequent processing (e.g., filtering) by the WSS. Alternatively, each I/O may be independently programmed, operative, and/or configured as an output for outputting an optical signal after processing by the WSS. In the example WSS' shown in Figs. 2A-4B, each WSS has four I/Os 20-1 through 20-4 programmed, operative, and/or configured as optical inputs and four I/Os 22-1 through 22-4 programmed, operative, and/or configured as optical outputs.

With reference to Figs. 2A-4B, in an example, an optical signal input into the I/O 20-1 of a WSS may, after processing (i.e., phase and/or amplification control) by the WSS (including the WSS1 and the WSS2 shown in Figs. 4A-4B), be output via the I/O 22-1 of the WSS after a "PASS 1" through the WSS. The optical signal output by via the I/O 22-1 of the WSS may then be input into the I/O 20-2 of the WSS for processing by the WSS and then output via the I/O 22-2 of the WSS after a "PASS 2" through the WSS.

The optical signal output by the via the I/O 22-2 of the WSS may then be input into the I/O 20-3 of the WSS for processing by the WSS and then output via the I/O 22-3 of the WSS after a "PASS 3" through the WSS. Next, the optical signal output via the I/O 22-3 of the WSS may optionally be input into the I/O 20-4 of the WSS for processing by the WSS and then output via the I/O 22-4 of the WSS after an optional "PASS 4" through the WSS.

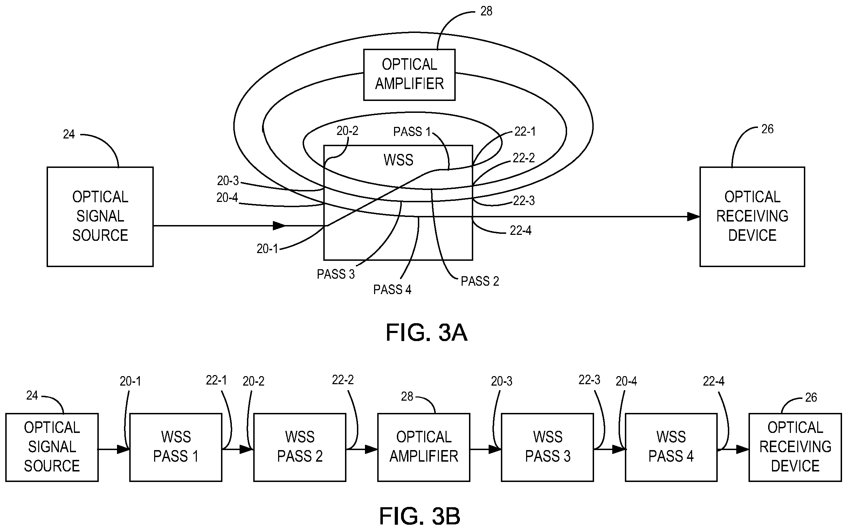

In the example shown in Figs. 2A-2B, the optical signal input into the I/O 20-1 of the WSS may be received from an optical signal source 24 and the optical signal output via the I/O 22-4 of the WSS, after PASSES 1-4 through the WSS, may be provided to an optical amplifier 28 for amplification and then to a suitable and/or desirable optical receiving device 26. In this example, the WSS may be programmed, operative, and/or configured to control the phase and/or amplitude, preferably both the phase and amplitude, of the optical signal using the same filter pattern or filtering function for each pass of the optical signal through the WSS. In the example shown in Figs. 3A-3B, the optical signal input into the I/O 20-1 of the WSS may be received from an optical signal source 24 and the optical signal output via the I/O 22-2 of the WSS, after PASSES 1 and 2 through the WSS, may be provided to an optical amplifier 28 for amplification and then to the I/O 20-3 of the WSS for PASSES 3-4 through the WSS. After PASS 4 through the WSS, the optical signal output via the I/O 22-4 of the WSS may be provided to a suitable and/or desirable optical receiving device 26. In this example, the WSS may be programmed, operative, and/or configured to control the phase and/or amplitude, preferably both the phase and amplitude, of the optical signal using the same filter pattern or filtering function for each pass of the optical signal through the WSS.

In the example shown in Figs. 4A-4B, the optical signal input into the I/O 20-1 of the WSS1 may be received from an optical signal source 24. After PASSES 1 and 2 through the WSS1, the optical signal may be output via I/O 22-2 of the WSS1 to a first optical amplifier 28-1. After amplification by the first optical amplifier 28-1, the optical signal may be input to the I/O 20-3 of the WSS1 for PASSES 3 and 4 through the WSS1. In this example, the WSS1 may be programmed, operative, and/or configured to control the phase and/or amplitude, preferably both the phase and amplitude, of the optical signal using the same filter pattern or filtering function for each pass of the optical signal through the WSS1. After PASS 4 through the WSS1, the optical signal output via the I/O 22-4 of the WSS1 may be input to the I/O 20-1 of the WSS2.

After PASSES 1 and 2 through the WSS2, the optical signal may be output via the I/O 22-2 of WSS2 to a second optical amplifier 28-2. After amplification by the second optical amplifier 28-2, the optical signal may be input to the I/O 20-3 of the WSS2 for PASS 3 and optionally PASS 4 through the WSS2. Where the WSS2 is not configured to implement the optional PASS 4 through the WSS2, after PASS 3 through the WSS2 the optical signal may be output via the I/O 22-3 of the WSS2 to a suitable and/or desirable optical receiving device 26. In contrast, where the WSS2 is configured to implement the optional PASS 4 through the WSS2, the optical signal, after PASS 4 through the WSS2, may be output via the I/O 22-4 of the WSS2 to the suitable and/or desirable optical receiving device 26. In this example, the WSS2 may be programmed, operative, and/or configured to control the phase and/or amplitude, preferably only the amplitude, of the optical signal using the same filter pattern or filtering function for each pass of the optical signal through the WSS2.

In an example, each optical signal source 4 may be any suitable and/or desirable light source, now known or hereinafter developed, such as, without limitation, an amplified spontaneous emission (ASE) broadband light source, e.g., a doped fiber amplifier, or a light emitting diode. However, this is not to be construed in a limiting sense since it is envisioned that the optical signal source may be any suitable and/or desirable broadband light source.

In an example, at least one pass of the optical signal through a WSS (including WSS1 and WSS2 shown in Figs. 4A-4B) after amplification by an OA 28 (including OA 28-1 and OA 28-2 shown in Figs. 4A-4B) may be desirable to remove any undesirable wavelengths of light output by the OA 28, i.e., the WSS may remove light emitted by the OA at frequencies that a user or an application may desire not to be present.

In an example, each optical amplifier 28 may be any suitable and/or desirable type of optical amplifier, now known or hereinafter developed, such as, without limitation, an Erbium doped fiber amplifier (EDFA). However, this is not to be construed in a limiting sense since it is envisioned that each optical amplifier 28 may be any suitable and/or desirable type of optical amplifier.

In an example, each optical receiving device 26 may be any suitable and/or desirable optical receiving device, now known or hereinafter developed, such as, without limitation: an optical amplifier, an optical switch, an optical receiver, an optical transponder, an optical add-drop multiplexer, a wavelength selective switch, an optical filter, or an optical spectrum analyzer. However, this is not to be construed in a limiting sense since it is envisioned that the optical receiving device 26 may be any suitable and/or desirable optical receiving device, now known or hereinafter developed, that may be usable for processing the optical signal output to the optical receiving device 26 via a WSS.

The examples shown in Figs. 2A-4B and described above are strictly for the purpose of illustration in the present disclosure and are not to be construed in a limiting sense. For example, the configuration of each WSS (including WSS1 and WSS2 shown in Figs. 4A-4B), the number of PASSES through each WSS, and/or the location of each optical amplifier in the path of the optical signal from the optical signal source 24 to the optical receiving device 26 is/are not to be construed in a limiting sense since it is envisioned that the configuration of each WSS, the number of PASSES through each WSS, and/or the location of each optical amplifier in the path of the optical signal from the optical signal source 24 to the optical receiving device 26 may be selected by one skilled in the art to achieve a desired level or degree of optical filtration of the optical signal deemed suitable and/or desirable for a particular application.

In an example, except as may be expressly described in this disclosure, each WSS may be programmed, operative, and/or configured to perform the same filtering function for each PASS of the optical signal through the WSS. For example, each WSS (including WSS1 and WSS2) may be programmed, operative, and/or configured to perform the same filtering function, e.g., phase only filtering, amplitude only filtering, or both phase and amplitude filtering, for each PASS through the WSS.

In another example, WSS1 may be programmed, operative, and/or configured to perform both phase and amplitude filtering for each PASS of the optical signal through the WSS1 while the WSS2 may be programmed, operative, and/or configured to perform amplitude only (or phase only) filtering for each PASS of the optical signal through WSS1, i.e., WSS1 and WSS2 may be programmed, operative, and/or configured to perform different filtering functions. In another example, WSS1 and WSS2 may each be programmed, operative, and/or configured to perform the same filtering function, e.g., amplitude only filtering, phase only filtering, or both amplitude and phase filtering.

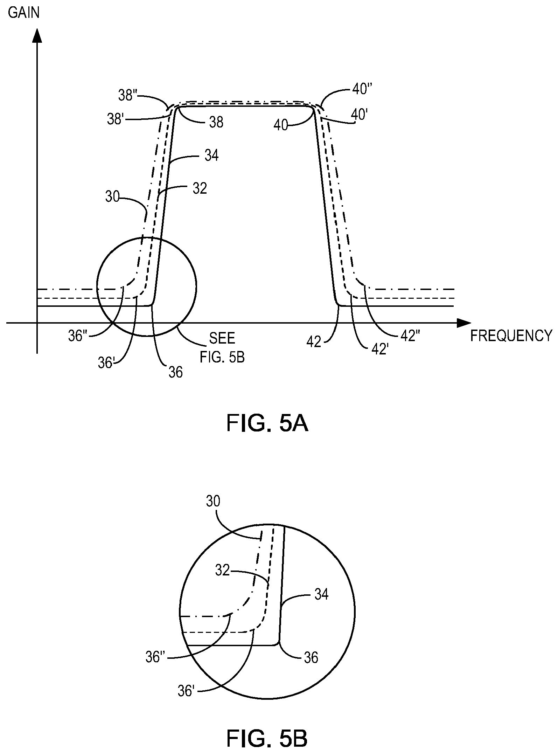

Figs. 5A-5B show example plots of broadband optical signal spectrums 30, 32, and 34 that may be received at the inputs of the optical receiving devices 26 shown in Figs. 2A, 3A, and 4A, respectively. As can be seen, the broadband optical signal spectrum 34 that may be produced by the broadband optical signal filtering system of Fig. 4A, has sharper features or transitions 36, 38, 40, and 42 (where the slope of the broadband optical signal spectrum 34 changes rapidly or suddenly) than the features or transitions 36', 38', 40', and 42' of broadband optical signal spectrum 32 that may be produced by the broadband optical signal filtering system of Fig. 3A. Similarly, the broadband optical signal spectrum 32 that may be produced by the broadband optical signal filtering system of Fig. 3A, has sharper features or transitions 36', 38', 40', and 42' than the features or transitions 36", 38", 40", and 42" of the broadband optical signal spectrum 30 that may be produced by the broadband optical signal filtering system of Fig. 2A.

The example plots 30, 32, and 34 shown in Figs. 5A-5B are strictly for the purpose of illustration and are not to be constructed in a limiting sense. For example, without limitation, the bandwidth of the plots 30, 32, and 34 are illustrated as being separated in from each other, with plot 30 having the largest bandwidth and plot 36 having the smallest bandwidth, whereas in practice two or more of these bandwidths may be the same or different from each other and/or may overlap and/or cross at various points. In another example, the maximum gain of the example plots 30, 32, and 34 are shown spaced vertically from each whereas in practice two or more of these gains may be the same or different from each other and/or may overlap and/or cross at various points. Accordingly, the example plots 30, 32, and 34 shown in Figs. 5A-5B are not to be constructed in a limiting sense.

Details regarding how each WSS (including the WSS1 and the WSS2 shown in Figs. 4A-4B) may control the phase and/or amplitude of each PASS of the optical signal therethrough is described in the paper titled "Dispersion Trimming in a Reconfigurable Wavelength Selective Switch", by Roelens et al., Journal Of Lightwave Technology, Vol. 26, No. 1, January 1, 2008, which is incorporated herein in its entirely by reference. Briefly, the key points of this paper include: (a) the optical signal may be attenuated in the WSS - that is to experience wavelength dependent loss (or negative gain), referred to as 'amplitude' in this disclosure -, by the WSS redirecting some of the light in a different direction than where it is configured to be switched, e.g., between internal elements of the WSS or to an I/O 22 of the WSS; and (b) the phase of the light may also be changed. Under conditions where the WSS does not include strong phase gradients, changing the phase of the light may not cause attenuation. However, where strong phase gradients are present, attenuation may occur. This attenuation may be due to misalignment of the optical signal propagating between internal elements of the WSS in each PASS of the optical signal through the WSS.

To this end, the WSS may be programmed to change the phase of an optical signal, and just like with changing the amplitude of the optical signal, the change to the phase of an optical signal may be done on a per-wavelength basis. i.e., each wavelength may be assigned its own phase value. The phase gradient (referred to as 'group delay' in the paper) refers to how a specific phase assignment at one wavelength compares with the phase assignment of its neighbouring wavelengths, and if the phase is significantly different, then this is a large gradient. Accordingly, if the phase values across all of the wavelengths are relatively constant, then there only small gradients, and there is negligible attenuation. But for wavelengths where there are large phase gradients, then attenuation may occur at those wavelengths.

These two ways of attenuating the optical signal are orthogonal, i.e. can both be independently implemented by the WSS. In an example, it is believed that attenuation of the optical signal by the WSS due to phase control (point (b) above) may be 'sharper' than attenuation of the optical signal by the WSS due to amplitude control (point (a) above), but there is less control over attenuation due to phase control since the attenuation due to phase is more of a by-product of the phase control. As such, attenuating via phase control may create side-lobes.

Other non-limiting examples or aspects of this disclosure are set forth in the following illustrative and exemplary numbered clauses:
Clause 1: A method of filtering a broadband optical signal comprises: (a) outputting a broadband optical signal; (b) filtering the broadband optical signal a plurality of times; (c) optically amplifying the broadband optical signal; and (d) providing the filtered and amplified broadband optical signal to an optical receiving device.
Clause 2: The method of clause 1, wherein step (c) may include, optically amplifying the broadband optical signal after the plurality of times in step (b).
Clause 3. The method of clause 1 or 2, wherein step (c) may include, optically amplifying the broadband optical signal between a pair of the plurality of times in step (b).
Clause 4: The method of any one or clauses 1-3, wherein step (b) may include, filtering the broadband optical signal with the same filtering function each of the plurality of times.
Clause 5: The method of any one or clauses 1-4, wherein: step (b) may include, filtering the broadband optical signal a first plurality of times using the same filtering function each time; and step (c) may include optically amplifying the broadband optical signal between one pair of the first plurality of times.
Clause 6: The method of any one or clauses 1-5, wherein step (b) may further include: filtering the broadband optical signal a second plurality of times using a second filtering function each time; and step (c) may include optically amplifying the broadband optical signal between one pair of the second plurality of times.
Clause 7: The method of any one or clauses 1-6, wherein: the first filtering function may comprise phase and amplitude filtering; and the second filtering function may comprise amplitude only filtering.
Clause 8: The method of any one or clauses 1-7, wherein: the first filtering function is performed by a first wavelength selective switch; and the second filtering function is performed by a second wavelength selective switch.
Clause 9; A method of filtering a broadband optical signal comprises: (a) causing a broadband optical signal to pass multiple times through a first wavelength selective switch (WSS1); (b) between at least one pair of passes of the broadband optical signal through the WSS1 in step (a), amplifying the broadband optical signal; (c) following steps (a) and (b), causing the broadband optical signal to pass multiple times through a second wavelength selective switch (WSS2); and (d) between at least one pair of passes of the broadband optical signal through the WSS2 in step (c), amplifying the broadband optical signal.
Clause 10: The method of clause 9, wherein at least one of the following: the WSS1 may be programmed, operative, and/or configured to perform spectral shaping or filtering of the broadband optical signal using phase and amplitude filtering; and the WSS2 may be programmed, operative, and/or configured to perform spectral shaping or filtering of the broadband optical signal using amplitude only filtering.
Clause 11: The method of clause 9 or 10, wherein, following step (d), the broadband optical signal may have a shape of a bandpass filtered signal.
Clause 12: The method of any one of clauses 9-11, further including: (e) following steps (c) and (d), outputting the broadband optical signal to an optical receiving device.
Clause 13: The method of any one of clauses 9-12, wherein steps (a) and (b) may comprise: (1) causing the broadband optical signal to pass two times through the WSS1; (2) following step (1), amplifying the broadband optical signal; and (3) following step (2), causing the broadband optical signal to pass at least one more time through the WSS1.
Clause 14: The method of any one of clauses 9-13, wherein steps (c) and (d) may comprise: (1) causing the broadband optical signal to pass two times through the WSS2; (2) following step (1), amplifying the broadband optical signal; and (3) following step (2), causing the broadband optical signal to pass at least once more through the WSS2.
Clause 15: A broadband optical signal filtering system comprising first and second optical amplifiers and first and second wavelength selective switches (WSS1 and WSS2) connected whereupon, a broadband optical signal passes through the broadband optical signal filtering system in the following order: (a) through the WSS1 at least one time; (b) through the first optical amplifier; (c) through the WSS1 at least once more; (d) through the WSS2 at least one time; (e) through the second optical amplifier; and (f) through the WSS2 at least one more time.
Clause 16: The broadband optical signal filtering system of clause 15, wherein at least one of the following: the WSS1 is programmed, operative, and/or configured to perform spectral shaping or filtering of each pass of the broadband optical signal through the WSS1 using phase and amplitude filtering; and the WSS2 is programmed, operative and/or configured to perform spectral shaping or filtering of each pass of the broadband optical signal through the WSS2 using amplitude only filtering.
Clause 17: The broadband optical signal filtering system of clause 15 or 16, wherein: the WSS1 may perform the same spectral shaping or filtering of each pass of the broadband optical signal through the WSS1; and the WSS2 may perform the same spectral shaping or filtering of each pass of the broadband optical signal through the WSS2.
Clause 18: The broadband optical signal filtering system of any one of clauses 15-17, further including at least one of the following: a broadband optical signal source outputting the broadband optical signal to the WSS1 prior to step (a); and an optical receiving device coupled to receive the broadband optical signal from the WSS2 following step (f).
Clause 19: The broadband optical signal filtering system of any one of clauses 15-18, wherein at least one of the following: step (a) includes the broadband optical signal passing through the WSS1 twice; step (c) includes the broadband optical signal passing through the WSS1 twice; and step (d) includes the broadband optical signal passing through the WSS2 twice.

Although this disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

## Claims

1. A method of filtering a broadband optical signal comprising:
(a) outputting a broadband optical signal;
(b) filtering the broadband optical signal a plurality of times;
(c) optically amplifying the broadband optical signal; and
(d) providing the filtered and amplified broadband optical signal to an optical receiving device.

2. The method of claim 1, wherein step (c) includes, optically amplifying the broadband optical signal after the plurality of times in step (b);
or wherein step (c) includes, optically amplifying the broadband optical signal between a pair of the plurality of times in step (b).

3. The method of claim 1 or claim 2, wherein step (b) includes, filtering the broadband optical signal with the same filtering function each of the plurality of times.

4. The method of any preceding claim, wherein:
step (b) includes, filtering the broadband optical signal a first plurality of times using a first filtering function each time; and
step (c) includes optically amplifying the broadband optical signal between one pair of the first plurality of times.

5. The method of claim 4, wherein step (b) further includes:
filtering the broadband optical signal a second plurality of times using a second filtering function each time; and
step (c) includes optically amplifying the broadband optical signal between one pair of the second plurality of times;
and optionally wherein:
the first filtering function comprises phase and amplitude filtering; and
the second filtering function comprises amplitude only filtering;
preferably wherein:
the first filtering function is performed by a first wavelength selective switch; and
the second filtering function is performed by a second wavelength selective switch.

6. A method of filtering a broadband optical signal comprising:
(a) causing a broadband optical signal to pass multiple times through a first wavelength selective switch (WSS1);
(b) between at least one pair of passes of the broadband optical signal through the WSS1 in step (a), amplifying the broadband optical signal;
(c) following steps (a) and (b), causing the broadband optical signal to pass multiple times through a second wavelength selective switch (WSS2); and
(d) between at least one pair of passes of the broadband optical signal through the WSS2 in step (c), amplifying the broadband optical signal.

7. The method of claim 6, wherein at least one of the following:
the WSS 1 is programmed, operative, and/or configured to perform spectral shaping or filtering of the broadband optical signal using phase and amplitude filtering; and
the WSS2 is programmed, operative, and/or configured to perform spectral shaping or filtering of the broadband optical signal using amplitude only filtering.

8. The method of claim 6 or claim 7, wherein, following step (d), the broadband optical signal has a shape of a bandpass filtered signal.

9. The method of any of claims 6 to 8, further including:
(e) following steps (c) and (d), outputting the broadband optical signal to an optical receiving device.

10. The method of any of claims 6 to 9, wherein steps (a) and (b) comprise:
(1) causing the broadband optical signal to pass two times through the WSS1;
(2) following step (1), amplifying the broadband optical signal; and
(3) following step (2), causing the broadband optical signal to pass at least one more time through the WSS1;
and optionally, wherein steps (c) and (d) comprise:
(1) causing the broadband optical signal to pass two times through the WSS2;
(2) following step (1), amplifying the broadband optical signal; and
(3) following step (2), causing the broadband optical signal to pass at least one more time through the WSS2.

11. A broadband optical signal filtering system comprising first and second optical amplifiers and first and second wavelength selective switches (WSS1 and WSS2) connected whereupon, a broadband optical signal passes through the broadband optical signal filtering system in the following order:
(a) through the WSS1 at least one time;
(b) through the first optical amplifier;
(c) through the WSS1 at least once more;
(d) through the WSS2 at least one time;
(e) through the second optical amplifier; and
(f) through the WSS2 at least once more.

12. The broadband optical signal filtering system of claim 11, wherein at least one of the following:
the WSS1 is programmed, operative, and/or configured to perform spectral shaping or filtering of each pass of the broadband optical signal through the WSS1 using phase and amplitude filtering; and
the WSS2 is programmed, operative and/or configured to perform spectral shaping or filtering of each pass of the broadband optical signal through the WSS2 using amplitude only filtering;
and optionally, wherein:
the WSS1 performs the same spectral shaping or filtering of each pass of the broadband optical signal through the WSS1; and
the WSS2 performs the same spectral shaping or filtering of each pass of the broadband optical signal through the WSS2.

13. The broadband optical signal filtering system of claim 11 or claim 12, further including at least one of the following:
a broadband optical signal source outputting the broadband optical signal to the WSS1 prior to step (a); and
an optical receiving device coupled to receive the broadband optical signal from the WSS2 following step (f).

14. The broadband optical signal filtering system of any of claims 11 to 13, wherein at least one of the following:
step (a) includes the broadband optical signal passing through the WSS1 twice;
step (c) includes the broadband optical signal passing through the WSS1 twice; and
step (d) includes the broadband optical signal passing through the WSS2 twice.
